Europäisches Patentamt

European Patent Office

Office européen des brevets

(11) Numéro de publication: **0 160 777**
**A1**

## (12) DEMANDE DE BREVET EUROPEEN

(21) Numéro de dépôt: **85100324.4**

(22) Date de dépôt: **15.01.85**

(51) Int. Cl.⁴: **H 01 B 3/44**
**C 08 K 3/22, C 08 K 5/54**
**C 08 K 5/52, C 08 L 23/04**

(30) Priorité: **17.01.84 FR 8400640**

(43) Date de publication de la demande:
**13.11.85 Bulletin 85/46**

(84) Etats contractants désignés:
**BE CH DE FR GB IT LI NL SE**

(71) Demandeur: **LES CABLES DE LYON Société anonyme dite:**
**170 quai de Clichy**
**F-92111 Clichy Cedex(FR)**

(72) Inventeur: **Prigent, Madeleine**
**10, allée des Fraises**
**F-91460 Marcoussis(FR)**

(72) Inventeur: **Bonicel, Jean-Pierre**
**14, rue des Tournelles**
**F-69005 Lyon(FR)**

(72) Inventeur: **Cottevieille, Christian**
**187, rue de Paris**
**F-93100 Montreuil(FR)**

(74) Mandataire: **Weinmiller, Jürgen et al,**
**Zeppelinstrasse 63**
**D-8000 München 80(DE)**

(54) Composition thermoplastique resistante au feu.

(57) Composition thermoplastique résistante au feu, comprenant au moins un polymère d'éthylène et/ou un copolymère d'éthylène et d'un autre composé organique, une charge minérale susceptible de libérer des ions oxhydryle, un alocxysilane jouant le rôle d'agent de couplage entre le polymère ou copolymère et la charge minérale, et un plastifiant.

L'alcoxysilane est un aminoalkyl-alcoxysinale, et le polymère ou copolymère est non réticulé.

Composition thermoplastique résistante au feu

La présente invention concerne une composition thermoplastique résistante au feu, comprenant au moins un polymère d'éthylène et/ou un copolymère d'éthylène et d'un autre composé organique, une charge minérale susceptible de libérer des ions oxhydryle, un alcoxysilane jouant le rôle d'agent de couplage entre le polymère ou copolymère et la charge minérale, et un plastifiant.

On a déjà proposé dans le document FR-A-2 141 918 une composition de ce genre, dans laquelle l'alcoxysilane est un alkyl inférieur-alcoxysilane, un alcényl-alcoxysilane ou un alcyne-alcoxysilane, notamment un vinylsilane. On y a aussi proposé de substituer à l'alcoxysilane un aminosilane. Toutefois ces compositions ne donnent de très bons résultats que si le polymère ou copolymère est réticulé et si on utilise comme agent de couplage un vinylsilane.

La présente invention a pour but de procurer une composition thermoplastique résistante au feu dont il ne soit pas nécessaire de réticuler le polymère ou copolymère, et qui présente encore de bonnes propriétés mécaniques après vieillissement et en présence d'huile.

La composition selon l'invention est caractérisée en ce que son alcoxysilane est un aminoalkyl-alcoxysilane, et en ce que le polymère ou copolymère est non réticulé.

Elle répond de préférence à au moins l'une des caractéristiques suivantes :

- L'aminoalkyl-alcoxysilane est le gamma-aminopropyl-triéthoxysilane.

- La proportion d'amino alkyl-alcoxysilane est comprise entre 0,5% et 5% en poids par rapport au polymère ou copolymère.

- Le copolymère est un copolymère d'éthylène et d'acétate de vinyle.

- Le copolymère est un copolymère d'éthylène et d'acrylate d'éthyle ou d'acrylate de butyle.

- Le copolymère d'éthylène est greffé par des groupe carboxyles.

- La charge minérale est le trihydrate d'alumine, le kaolin, la silice, le carbonate de calcium ou le talc.

- La proportion de charge minérale est comprise entre 50% et 200% en poids par rapport à la quantité de polymère ou copolymère.

- Le plastifiant est le triphénylphosphate, en proportion de 1% à 10% en poids par rapport au polymère ou copolymère.

Il est décrit ci-après à titre d'exemple, deux compositions thermoplastiques selon l'invention et leur propriétés mécaniques après et avant vieillissement, soit à l'air, soit en présence d'huile.

EXEMPLE 1

La composition comprend en poids

| | |
|---|---|
| Copolymère d'éthylène et d'acétate de vinyle | 100 parties |
| Trihydrate d'alumine Al (OH)$_3$ | 190 parties |
| Gamma-aminopropyl-triéthoxysilane | 1,25 partie |
| Antioxydant (1,2-dihydro-2,2, 4-triméthylquinoléine) | 1 partie |
| Triphénylphosphate | 3 parties |

Les propriétés mécaniques de cette composition, ainsi que d'une composition identique, mais exempte de gamma-aminopropyltriéthoxysilane, sont les suivantes, avant et après vieillissement

| | | Sans silane | Avec silane |
|---|---|---|---|
| Résistance à la rupture Rr (en bars) | | 83,2 | 131 |
| Allongement à la rupture Ar (%) | | 92 | 180 |
| Après 10 jours de vieillissement à 100°C | $\Delta$ Rr | - 55% | + 16% |
| | $\Delta$ Ar | + 82% | - 7% |
| Après 7 jours à 135°C | $\Delta$ Rr | | + 8,5% |
| | $\Delta$ Ar | | - 20% |
| Après 4 heures à 70°C en présence d'huile ASTM n° 2 | $\Delta$ Rr | - 25% | - 25% |
| | $\Delta$ Ar | + 215% | + 14% |
| Indice d'oxygène limite | | | 39 |

EXEMPLE 2

La composition comprend en poids Copolymère d'éthylène et d'acétate de

| | |
|---|---|
| vinyle greffé par des groupes carboxyles | 100 parties |
| Trihydrate d'alumine Al $(OH)_3$ | 170 parties |
| Silice | 30 parties |
| Gamma-aminopropyl-triéthoxysilane | 2,5 parties |
| Antioxydant | |
| (1,2-dihydro-2,2 4-triméthylquinoléine) | 1 partie |
| Triphénylphosphate | 3 parties |

Ses propriétés mécaniques, ainsi que celles d'une composition analogue, mais exempte de gamma-aminopropyl-triéthoxysilane, sont les suivantes, avant et après vieillissement

| | Sans silane | Avec silane |
|---|---|---|
| Résistance à la rupture Rr (en bars) | 83 | 130 |
| Allongement à la rupture Ar (%) | 52 | 150 |
| Après vieillissement 10 jours à 100°C { $\Delta$ Rr | Cassant | + 23% |
| $\Delta$ Ar | inutilisable | - 13% |
| Après 4 heures à 70°C en présence d'huile ASTM n°2 { $\Delta$ Rr | | - 22% |
| $\Delta$ Ar | | + 35% |

L'invention s'applique notamment à la fabrication de gaines pour câbles électriques, tels que des câbles de centraux téléphoniques.

REVENDICATIONS

1/ Composition thermoplastique résistante au feu, comprenant au moins un polymère d'éthylène et/ou un copolymère d'éthylène et d'un autre composé organique, une charge minérale susceptible de libérer des ions oxhydryle, un alcoxysilane jouant le rôle d'agent de couplage entre le polymère ou copolymère et la charge minérale, et un plastifiant, caractérisé en ce que l'alcoxysilane est un aminoalkyl-alcoxysilane, et en ce que le polymère ou copolymère est non réticulé.

2/ Composition selon la revendication 1, caractérisée en ce que l'aminoalkyl-alcoxysilane est le gamma-aminopropyl-triéthoxysilane.

3/ Composition selon les revendications 1 ou 2, caractérisée en ce que la proportion d'amino alkyl-alcoxysilane est comprise entre 0,5% et 5% en poids par rapport au polymère ou copolymère.

4/ Composition selon l'une des revendications 1 à 3, caractérisé en ce que le copolymère est un copolymère d'éthylène et d'acétate de vinyle.

5/ Composition selon l'une des revendications 1 à 3, caractérisée en ce que le copolymère est un copolymère d'éthylène et d'acrylate d'éthyle ou de butyle.

6/ Composition selon les revendications 4 ou 5, caractérisée en ce que le copolymère est greffé par des groupes carboxyles.

7/ Composition selon l'une des revendication 1 à 6, caractérisée en ce que la charge minérale est le trihydrate d'alumine, le kaolin, le silice, le carbonate de calcium ou le talc.

8/ Composition selon l'une des revendications 1 à 7, caractérisée en ce que la proportion de charge minérale est comprise entre 50% et 200% en poids par rapport à la quantité de polymère ou copolymère.

9/ Composition selon l'une des revendications 1 à 8, caractérisée en ce que le plastifiant est le triphénylphosphate, en proportion de 1% à 10% en poids par rapport au polymère ou copolymère.

**Office européen
des brevets**

**RAPPORT DE RECHERCHE EUROPEENNE**

**0160777**
Numéro de la demande

EP  85 10 0324

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| D,X | FR-A-2 141 918  (NATIONAL DISTILLERS) <br> * Revendications 1,3-8; page 9, ligne 38 - page 10, ligne 2; page 11, lignes 28-35; tableau C, composition 13 * | 1-4,7, 8 | H 01 B    3/44 <br> C 08 K    3/22 <br> C 08 K    5/54 <br> C 08 K    5/52 <br> C 08 L  23/04 |
| X | EP-A-0 023 239  (UNION CARBIDE) <br> * Revendication 1; page 4, ligne 25 - page 5, ligne 9; page 7, lignes 19-21; page 4, lignes 15-22 * | 1-5 | |
| X | EP-A-0 004 017  (AEG TELEFUNKEN) <br><br> * Revendications 1-6 * | 1,5,7-9 | |
| X | EP-A-0 082 407  (AEG TELEFUNKEN) <br> * Résumé; revendications 1-11; page 3, lignes 19-24 * | 1,6-8 | **DOMAINES TECHNIQUES RECHERCHES (Int. Cl 4)** |
| A | EP-A-0 054 424  (LINDSAY & WILLIAMS) <br> * Revendications 1-7 * | 1 | H 01 B <br> C 08 L <br> C 08 K |

Le présent rapport de recherche a été établi pour toutes les revendications

| Lieu de la recherche | Date d'achèvement de la recherche | Examinateur |
|---|---|---|
| LA HAYE | 31-05-1985 | GOOVAERTS R.E. |